(19) Europäisches Patentamt

European Patent Office

Office européen des brevets

(11) EP 0 434 678 B2

(12) NEW EUROPEAN PATENT SPECIFICATION

(45) Date of publication and mention
of the opposition decision:
**19.08.1998 Bulletin 1998/34**

(45) Mention of the grant of the patent:
**02.12.1992 Bulletin 1992/49**

(21) Application number: **88908200.4**

(22) Date of filing: **14.09.1988**

(51) Int. Cl.$^6$: **B60R 21/32**

(86) International application number:
**PCT/EP88/00837**

(87) International publication number:
**WO 90/02674 (22.03.1990 Gazette 1990/07)**

(54) **AIR BAG SYSTEM FOR PROTECTION OF THE OCCUPANTS OF MOTOR VEHICLES**

AIRBAG-SYSTEM ZUM SCHÜTZEN VON KRAFTFAHRZEUGINSASSEN

SYSTEME DE COUSSINS PNEUMATIQUES DE SECURITE SERVANT A LA PROTECTION DES OCCUPANTS D'UN VEHICULE A MOTEUR

(84) Designated Contracting States:
**DE FR GB IT SE**

(43) Date of publication of application:
**03.07.1991 Bulletin 1991/27**

(73) Proprietor: **ROBERT BOSCH GMBH**
**70442 Stuttgart (DE)**

(72) Inventors:
• **SCHUMACHER, Hartmut**
**D-7000 Stuttgart 40 (DE)**
• **CRISPIN, Norbert**
**D-7145 Markgröningen (DE)**
• **MATTES, Bernhard**
**D-7123 Sachsenheim (DE)**
• **JEENICKE, Edmund**
**D-7141 Schwieberdingen (DE)**

(56) References cited:
**EP-A- 0 284 728**          **WO-A-87/07388**
**WO-A-88/01241**          **FR-A- 2 267 221**
**US-A- 4 220 871**

## Description

<u>State of the Art</u>

The present invention relates to an air bag system for protection of the occupants of a motor vehicle, of the kind described in the precharacterising clause of claim 1, and as known, from document WO-A-88/01241.

US-A-4,933,570 corresponding to EP-A-0284728 refers to a circuit arrangement for triggering a safety system. A circuit arrangement serves the purpose of triggering a motor vehicle air bag system and contains an energy source, at least one release switch and at least two series branches connected in parallel and each branch has a tripping device for an air bag. A series capacitor is provided in every series branch, this capacitor limiting the current quantity in the tripped case in order to guarantee a reliable tripping of the further tripping device which acts with a time delay.

In US-A-4,020,453 an acceleration sensing and safety-device actuating system, for actuating a safety device, such as a crash-sensitive automobile air bag detonator is disclosed. A differential amplifier forms part of an operational integrator responsive to an acceleration sensor and a reference potential. A threshold device, responsive to proper operation of the reference potential, triggers an output stage to set off the safety device when the differential amplifier output indicates a given deceleration. An isolating circuit isolates the output stage for a given time after starting the automobile. A control switch shorts the operating voltage in response to low operating potential or an inoperative safety circuit, and turns on a warning indicator.

US-A-4,438,424 refers to an electric apparatus for a vehicle safety device including an acutation recording apparatus for vehicle safety devices for protecting occupants in a vehicle during a crash. It includes an internal power supply circuit and a plurality of circuits each thereof including a parallel connection of a resistor and an external recorder driving an electric circuit. The apparatus also includes connecting terminals for connection to a power source, external crash sensors, external initiators for vehicle safety devices and external recorders. The apparatus is fabricated as a unit in the form of an integrated circuit package.

In an electric control circuit adapted to a safety apparatus including a plurality of actuators in parallel with each other to be electrically operated upon deceleration of vehicle in excess of a predetermined magnitude, as known from document US-A-4,220,871, a plurality of resistors are connected in series with the respective actuators, each resistance value of the resistors being predetermined in such a manner that even when one of the actuators is shorted at its conductors, a sufficient electric current is supplied to the remaining actuators.

A process for checking load resistor circuits is known from document WO 87/07388. In this process for checking the operativeness of a plurality of load resistor circuits (11A, 11B, 11N) driven by a common terminal output stage (10), electric parameters of each load resistor circuit (11A, 11B, 11N) are measured in an evaluating circuit (12), both when driven and when not driven by the terminal output stage (10), and these parameters are compared with predetermined reference values. When deviations are detected, a display means (13) is activated, if necessary a switching device (14) as well, which separates via switching means (14A, 14B, 14N or 14C) the terminal output stage (10) form a load resistor circuit that has been recognized as inoperative.

In document FR-A-2267221 a safety system for vehicle occupants comprising several ignition circuits in parallel is disclosed. Within each ignition circuit there is provided a fuse limiting the maximum current flowing therethrough.

In document WO88/01241 a driving and monitoring element for ignition circuits is disclosed. In this driving and monitoring element the ignition circuit is provided with a primer that can be actuated by a final stage and to which a checking current can be applied during a continuity check. Each ignition circuit is linked to an independent current source for checking the corresponding primer and to a reference circuit. Reference and initial voltages, as well as switchable reference and driving currents, can be derived from a central reference voltage. A first gate with a regulated source and a second gate with a regulated source, the parameters of which are derived from the central reference voltage allow to precise fault recognition to be obtained.

From document JP-A1-51-126633 a collision detection device is known comprising two different types of decelaration sensors, i. e. a piezo-electric deceleration sensor element and a mechanical collision detection sensor connected in series via an ignitor and the collector-emitter-path of a power transistor to a DC-current source. The power transistor is gate controlled by the output of an amplifier whose input is connected to the output of a monostable multivibrator.

Furtheron from the document H.Weber: "Electronic Breakerless Inductive Storage Ignition" in AUTOMOTIVE ELECTRONICS; Society of Automotive Engineers, New York, Feb. 1974, pp. 245-254 an electric breakerless inductive storage ignition system is known. In this system a primary winding of a ignition coil, the collector-emitter path of an ignition transistor and a current sense resistor are arranged in series. A current limiting circuit is provided sensing the current flowing through the current sense resistor and controlling the gate of the ignition transistor.

With such systems, it is required that reliable activation of the air bags be ensured in the situation that them is a loss of battery power at a time when such activation is needed and also in the event of shunts or short circuits forming in the driver's and/or front-seat passengers' gas generators. The firing of rear-seat passengers' igniters or squibs and the vehicle crash recorder (when fitted) must also be ensured.

It is an object of the present invention to develop a system in which reliability and safety are considerably enhanced, especially in case of loss of battery power.

The aforegoing object is achieved by adopting the features set forth in the characterising part of claim 1. These have the advantage that there is no risk of overloading the triggerable power switches by current.

Drawing

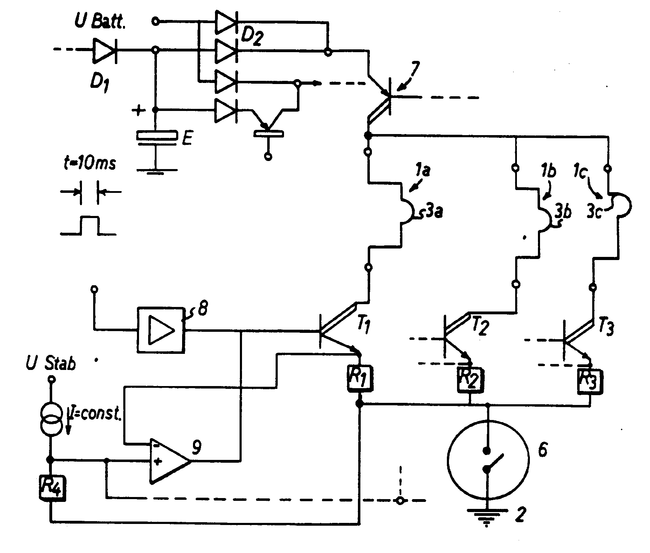

The invention is described further, by way of example only, with reference to the accompanying drawing which is a circuit diagram of one embodiment of an air bag protection system in accordance with the invention for the occupants of motor vehicles.

Description of the Exemplary Embodiment

The drawing shows part of an air bag protection system wherein a number of firing circuits 1a, 1b, 1c am connected in parallel between a regulated battery voltage $U_{BATT}$ and the earthed side 2 of the vehicle battery. Each firing circuit includes a respective igniter 3a, 3b, 3c connected in series with a respective power transistor $T_1$, $T_2$, $T_3$ and a low ohmic resistor $R_1$, $R_2$, $R_3$. Connected in series with the three resistors $R_1$, $R_2$, $R_3$ is a mechanical switch 6 of known type, which is sensitive to vehicle deceleration and which only closes when a predetermined retardation is experienced (such as would be incurred, for example, in a collision). Thus, in this embodiment, the single mechanical switch is common to all three firing circuits. The three igniters 3a, 3b, 3c are connected via a monitoring switch 7 and diodes $D_1$ and $D_2$ to the regulated battery voltage $U_{BATT}$. The diodes $D_1$ and $D_2$ serve as protection against incorrect battery polarisation and the monitoring switch enables the circuit to be selectively tested for correct operation.

Also connected to the battery voltage $U_{BATT}$, at a point downstream to the diode $D_1$ is a single energy storage capacitor E, preferably of the AL-ELCO type, having a large capacitance value, for example 10,000 uF. It will be noted that this single storage capacitor E is commonly connected via the high side monitoring transistor 7 to all three firing circuits 1a, 1b and 1c.

The occupant protection system is triggered when, in the event of an accident, a sensor (not shown) is activated and supplies a pulsed signal, for example of 10 ms duration, to turn on the power transistors $T_7$, $T_2$ and $T_3$ via driver stages 8 and additionally the high side power stage 7. Provided that the externally acting mechanical retardation on the vehicle has been sufficient to dose the arming switch 6, current from the single energy storage capacitor E can then pass through the igniters so as to inflate the associated air bags (not shown).

In order to limit the current passing through the igniters to an acceptable level, the voltages on the resistors $R_1$, $R_2$, $R_3$ are applied to the negative inputs (-) of respective comparators 9 (only one shown) serving as firing current limiters. The positive inputs (+) of the comparators are provided with reference voltages by passing a current through respective resistors $R_4$ from a constant current source 10 supplied with a stabilised voltage $U_{STAB}$. Upon the voltage at the negative input exceeding the reference voltage at the positive input of the comparator(corresponding to the current through the resistors $R_1$ $R_2$ $R_3$ having exceeded a pro determined value) the comparator outputs a signal to the bases of the transistors $T_1$, $T_2$, $T_3$ such as to cause the current passing through the collector-emitter paths of these transistors, and hence through the igniters 3a, 3b, 3c to be reduced to an acceptable level.

With limitation of the activation of the output stages in this manner both with respect to time and current, the required energy balance can be handled by the single capacitor E. By way of example, a 10,000 uF Al-Elco capacitor charged to 16-17 volts is sufficient in the case of two air bags. By using only one "large" capacitor instead of the usual several (usually 4) "small" capacitors one obtains, in principle, a capacitor (Al-Elco) with better characteristics (e.g. $R_{ESR}$, durability and reliability).

In one type of capacitor used in practice, the C.U product is (approximately) constant for a given size of casing. That is to say, the higher the capacitor of a specific size of casing is charged (the relatively lower is the undervoltage switch-off threshold of the unit), the greater is the amount of energy available.

$$\text{Energy} = \frac{C}{2}(U_1{}^2 - U_2{}^2)$$

where

U1 = charging voltage  
U2 = undervoltage threshold  
C = capacitance

By incorporating output stage current limitation, there is no risk of the firing transistor $T_1$, $T_2$, $T_3$ being overloaded by current, even when the energy reserve E is charged to a relatively high voltage (e.g. $U_1 = 40V$).

Likewise, the contacts of the mechanical switch 6 are not overloaded if the output stage current is limited as described above. Switches of this type are normally only rated at 10A for 10 ms. Current limitation to, say about 1.5A for each air bag output stage (and for each belt tightener, output stage, if present) will always keep the operation of the switch 6 within its permitted operational range (overthe entire fluctuation of the battery voltage e.g. $7V \leq U_{BATT} \leq 16V$).

The amount of additional hardware necessary to achieve this system, i.e. the expenditure on circuitry for limiting the firing current per output stage, is relatively small. Furthermore, the overall size and cost of the unit are not increased significantly when using only a single energy reserve capacitor E.

Although the number of igniters or squibs in the illustrated embodiment is three, them can be any desired number (e.g. driver and passenger system with belt tighteners for front and rear passengers includes 7 igniters).

## Claims

1. System for the protection of the occupants of a motor vehicle, particularly an air bag protection system, having a firing circuit (1) which is located between a battery supply voltage and the vehicle earth and which includes a plurality of bag igniters (3), each of which is connected in series with a respective triggerable power switch ($T_1$, $T_2$, $T_3$), and at least one retardation sensitive mechanical arming switch (6), there being associated with the firing circuits a single energy storage capacitor (E) associated commonly with all of said firing circuits (1a, 1b, 1c) for supplying initiation energy to those circuits over a upper common power stage (7) in the event of a loss of the battery supply voltage, characterized in that there is provided a means (9) of limiting the current flowing through the individual triggerable power switches ($T_1$, $T_2$, $T_3$), and hence through the igniters (3), from the energy storage capacitor (E), and wherein the current limiting means comprises a resistor ($R_1$, $R_2$, $R_3$) in series with each power switch ($T_1$, $T_2$, $T_3$), means for detecting the voltage drop across said resistors, comparing same with a refenence voltage and in the event that the voltage drop exceeds said reference voltage controlling the power switches ($T_1$, $T_2$, $T_3$) to reduce the current therethrough.

2. System according to claim 1, wherein, in addition to limiting the current which is passed through the power switches by the energy storage capacitor (E), them is provided a means of limiting the time duration for which the power switches are actuated.

3. System according to claim 1 or 2, wherein the power switches are transistors and wherein the voltage drops across the resistors and the reference voltage are compared in one or more comparators, the outputs of which am applied to the transistors such as to reduce the current passing therethrough.

4. System according to claim 3, wherein the time duration for which the power stages are actuated is limited by using pulsed trigger signals for actuating said power switches.

## Patentansprüche

1. System zum Schutz von Fahrzeuginsassen, insbesondere ein Airbag-System, das einen Zündkreis (1) umfaßt, der zwischen einer Batterieversorgungsspannung und der Fahrzeugmasse liegt und der eine Mehrzahl von Airbag-Zündpillen (3) umfaßt, von denen jede in Serie mit einem entsprechenden steuerbaren Leistungsschalter ($T_1$, $T_2$, $T_3$) verbunden ist, und mit mindestens einem verzögerungsempfindlichen mechanischen Sicherungsschalter (6), wobei den Zündkreisen ein einziger Energiespeicherkondensator (E) derart zugeordnet ist, daß er allen Zündkreisen (1a, 1b, 1c) gemeinsam zugeordnet ist, um diesen Zündkreisen Aktivierungsenergie über eine gemeinsame Leistungsstufe (7) zuzuführen, falls ein Verlust der Batterieversorgungsspannung auftritt, dadurch gekennzeichnet, daß Mittel (9) zur Begrenzung des Stroms vorgesehen sind, der durch die einzelnen steuerbaren Leistungsschalter ($T_1$, $T_2$, $T_3$), und folglich durch die Zündpillen (3) aus dem Energiespeicherkondensator (E) fließt, und wobei die Mittel zur Strombegrenzung einen Widerstand ($R_1$, $R_2$, $R_3$) in Serie mit jedem Leistungsschalter ($T_1$, $T_2$, $T_3$) umfassen, sowie Mittel, die den Spannungsabfall über jeden der genannten Widerstände feststellen, diesen mit einer Referenzspannung vergleichen und fur den Fall, daß der Spannunfsabfall die genannte Referenzspannung übersteigt, die Leistungsschalter ($T_1$, $T_2$, $T_3$) ansteuern, um den Strom durch diese zu reduzieren.

2. System nach Anspruch 1, dadurch gekennzeichnet, daß zusätzlich zur Begrenzung des Stroms, der aus dem Energiespeicherkondensator (E) durch die Leistungsschalter fließt, Mittel zur Begrenzung der Zeit vorgesehen sind, während der die Leistungsschalter angesteuert sind.

3. System nach Anspruch 1, dadurch gekennzeichnet, daß die Leistungsschalter Transistoren sind und daß der Spannungsabfall über den Widerständen und die Referenzspannung in einem oder mehreren Komparatoren verglichen werden, deren Ausgangssignale den Transistoren zugeleitet werden, um den Strom durch diese zu reduzieren.

4. System nach Anspruch 2 oder 3, falls bezogen auf Anspruch 2, dadurch, gekennzeichnet, daß die Zeitdauer, während der die Leistungsstufen aktiviert sind, dadurch begrenzt wird, daß diesen Leistungsstufen für deren Ansteuerung gepulste Signale zugeführt werden.

## Revendications

1. Système de protection des occupants d'un véhicule à moteur, et plus particulièrement système de protection à coussins pneumatiques de sécurité, comportant un circuit d'allumage (1) placé entre une tension d'alimentation de batterie et la masse du véhicule, ainsi qu'un certain nombre d'allumeurs (3) de coussins pneumatiques, chacun de ces allumeurs étant branché en série avec un commutateur de puissance déclechable respectif ($T_1$, $T_2$, $T_3$), le système comprenant également au moins un commutateur d'armement mécanique sensible su ralentissement (6), ainsi qu'un condensateur de stockage d'énergie unique (E) associé en commun à tous les circuits d'allumage (1a, 1b, 1c) pour fournir l'énergie de dédenchement à ces circuits sur un étage de puissance commun supérieur (7) en cas de panne de la tension d'alimentation de batterie, système caractérisé en ce qu'il comporte un dispositif (9) de limitation du courant provenant du condensateur de stockage d'énergie (E) et circulant à travers les commutateurs de puissance dédenchables ($T_1$, $T_2$, $T_3$), et par conséquent à travers les allumeurs (3), et en ce que les moyens de limitation de courant comprennent une résistance ($R_1$, $R_2$, $R_3$) branchée en série avec chaque commutateur de puissance ($T_1$, $T_2$, $T_3$), des moyens pour détecter la chute de tension aux bornes de ces résistances, pour comparer cette chute de tension à une tension de référence et pour réduire le courant traversant les résistances lorsque la chute de tension dépasse la tension de référence commandant les commutateurs de puissance ($T_1$, $T_2$, $T_3$).

2. Système selon la revendication 1, caractérisé en ce qu'en plus de la limitation du courant passant à travers les commutateurs de puissance par le condensateur de stockage d'énergie (E), on utilise un dispositif de limitation de la durée pendant laquelle les commutateurs de puissance sont actionnés.

3. Système selon la revendication 1, caractérisé en ce que les commutateurs de puissance sont des transistors et en ce que les chutes de tension aux bornes des résistances et la tension de référence sont comparées dans un ou plusieurs comparateurs dont les signaux de sortie sont appliqués aux transistors de manière à réduire le courant qui les traverse.

4. Système selon la revendication 2 ou selon revendication 3 dépendant de la revendication 2, caractérisé en ce que la durée pendant laquelle les étages de puissance sont actionnés, est limitée par l'utilisation de signaux de déclenchement pulsés destinés à actionner ces commutateurs de puissance.